# FASCICULE DE BREVET EUROPEEN

(11) **EP 1 046 968 B1**
(45) Date de publication et mention de la délivrance du brevet: **26.11.2008**
(21) Numéro de dépôt: 99107974.0
(22) Date de dépôt: 22.04.1999
(51) Int. Cl.: G04B 39/00, G04B 19/06

(54) **Fixation réciproque d'une glace, d'un cadran et d'un cercle d'encageage pour une pièce d'horlogerie**
Gegenseitige Befestigung eines Glases,eines Zifferblattes und eines Werkringes für eine Uhr
Means for interconnecting a crystal, a dial and a case-ring in a timepiece

(43) Date de publication de la demande: 25.10.2000
(73) Titulaire: ETA SA Manufacture Horlogère Suisse, 2540 Grenchen (CH)
(72) Inventeur: Stauffer, Philippe, 2000 Neuchâtel (CH)
(74) Mandataire: Ravenel, Thierry Gérard Louis

(56) Documents cités:
- DE-U- 7 000 980
- DE-U- 7 004 514
- FR-A- 2 038 181
- US-A- 5 703 837

## Description

La présente invention est relative à une pièce d'horlogerie comprenant un mouvement monté dans un cercle d'encageage, un cadran surmontant le cercle, une glace surmontant le cadran et des moyens pour fixer la glace sur une boîte.

Plusieurs documents décrivent la façon de monter les éléments cités ci-dessus les uns par rapport aux autres.

Le document CH 499 813 a trait à un dispositif de fixation d'un mouvement de montre dans sa boîte. Ce document indique que pour réaliser la fixation du cadran, on peut maintenir celui-ci par son pourtour extérieur dans un cran du cercle d'encageage, par sertissage. Comme ce dispositif connu présente l'inconvénient d'être mal adapté aux procédés modernes de fabrication en chaîne, le document cité propose un cadran muni d'oreilles permettant le centrage du cadran, ce cadran étant introduit dans un cran ménagé dans la partie supérieure du cercle d'encageage. Pour permettre ce centrage, le cercle présente aussi, dans sa partie supérieure des évidements correspondant aux oreilles du cadran, On obtient donc, dans cette réalisation, un positionnement angulaire et un centrage précis du cadran par rapport au cercle. Par contre aucun moyen n'est indiqué qui permette de positionner angulairement et de centrer la glace par rapport au cadran, puisque cette glace repose simplement dans un cran d'une carrure-lunette.

Le document EP 0 549 978 décrit une pièce d'horlogerie comprenant des moyens de positionnement angulaires d'une glace sur une boîte. Ces moyens de positionnement angulaires sont constitués, d'une part, par une encoche ménagée directement dans un bord de la glace et, d'autre part, par une protubérance qui est directement ménagée sur la carrure de la boîte et qui est engagée dans ladite encoche. En amenant la glace sur la carrure et en mettant en coïncidence par rotation l'encoche et la protubérance, on permet leur engagement angulaire relatif et on autorise finalement la fixation de la glace sur la boîte. Là aussi, bien qu'utilisant des moyens proches de ceux qui vont être décrits ci-après, il n'est pas question de positionnement angulaire de la glace par rapport au cadran.

On mentionnera encore qu'il est connu de certaines montres Swatch (marque déposée) de souder le cadran au moyen de trois tenons émergeant du cercle d'encageage. Là encore, il n'est pas question d'orienter et de centrer la glace par rapport au cadran.

Le document DE 70 04 514 U décrit une fixation réciproque d'une glace d'un cadran et d'une boîte pour une pièce d'horlogerie. Dans un mode d'exécution, la glace est munie d'un talon sous lequel sont intégrées des saillies de forme cylindrique. Ces saillies traversent des premiers trous pratiqués dans le cadran, puis des seconds trous pratiqués dans la boîte pour être chassées finalement dans des manchons. Il va de soi que cette construction permet le centrage et le positionnement angulaire de la glace par rapport au cadran et par rapport à la boîte. Cependant, on observera que ce système de montage est encombrant par la place qu'il nécessite en longueur. On fera remarquer aussi que ce système a pour but la fixation de la glace sur le cadran, puis sur la boîte mais non son orientation par rapport à ces éléments. Comme on le verra de la description qui va suivre, la glace selon la présente invention est fixée sur la boîte par d'autres moyens que ceux qui l'oriente par rapport cadran.

La nécessité de centrer et de positionner angulairement la glace par rapport au cadran existe en de nombreuses circonstances dont deux seront retenues ici en exemple.

Si le mouvement possède un anneau de quantième dont les chiffres apparaissent à tour de rôle derrière un guichet ménagé dans le cadran et si la glace possède une lentille destinée à agrandir ces chiffres, on comprendra que la lentille doit impérativement être située bien en face du guichet. Ceci nécessite une position bien précise de la glace par rapport au cadran.

Si des index d'heures ou des chiffres indiquant les heures sont apposés par décalque sur la paroi intérieure de la glace on comprendra aussi que le cadran sur lequel tournent les aiguilles doit être bien positionné par rapport à la glace. Les décalques apposées sous la glace pourraient aussi être des signes divers ou une marque, d'où également une position bien précise de la glace par rapport au cadran est exigée.

Jusqu'à aujourd'hui aucun moyen simple et économique n'a été proposé pour répondre par construction à de telles contraintes. Dans le cas du document CH 499 813 cité plus haut, il faudrait avoir recours à une intervention manuelle pour orienter correctement la glace par rapport au cadran. Dans le cas du document EP 0 549 978 également cité plus haut, comme la glace est orientée par rapport à la boîte, c'est le cadran qui devrait pouvoir être orienté manuellement par rapport à cette boîte. Or on conçoit bien que de telles orientations manuelles ne sont pas adaptées à un montage automatique de la pièce d'horlogerie.

Pour répondre à ces besoins, la pièce d'horlogerie selon la présente invention est définie par les caractéristiques de la revendication 1.

Les caractéristiques et avantages de l'invention apparaîtront à la lecture de la description détaillée qui suit, faite en référence aux dessins annexés uniquement à titre d'exemple et dans lesquels :
- la figure 1 est une coupe générale montrant la pièce d'horlogerie selon l'invention,
- la figure 2 est une vue de dessus en perspective éclatée de l'ensemble formé par le mouvement, le cercle d'encageage, le cadran et la glace, cet ensemble étant assemblé selon la présente invention.
- la figure 3 est une vue de dessous, en perspective éclatée du même ensemble que celui montré en figure 2,
- la figure 4 est une vue en plan du cercle d'encageage sur lequel est monté le cadran,
- la figure 5 est un agrandissement de la zone V de la figure 4,
- la figure 6 est un agrandissement de la zone VI de la figure 4,
- la figure 7 est un agrandissement de la zone VII de la figure 4, et
- la figure 8 est une vue de profil de la glace selon la flèche VIII de la figure 4, et
- la figure 9 est un agrandissement de la zone IX de la figure 8.

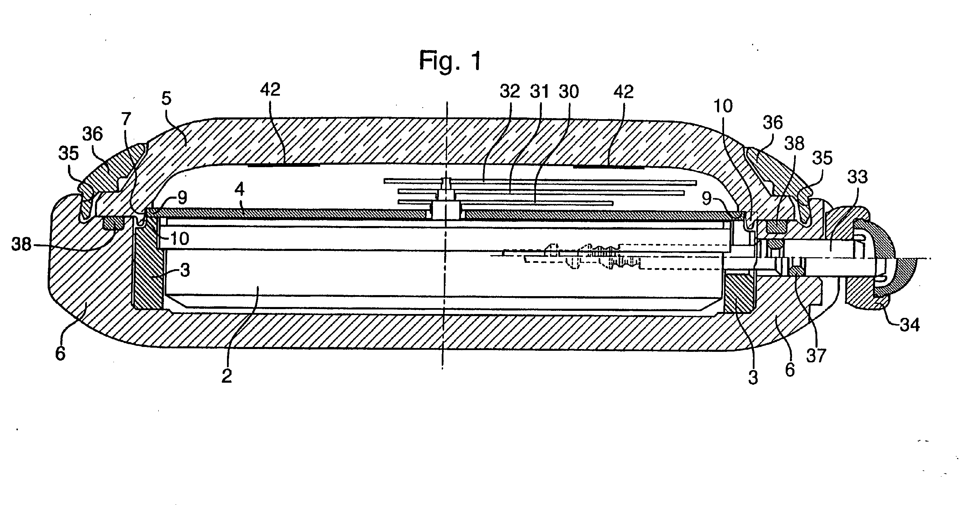

La pièce d'horlogerie de l'invention est montrée en coupe à la figure 1. Elle comporte un mouvement 2 monté dans un cercle d'encageage 3, un cadran 4 surmontant le cercle 3 et une glace 5 surmontant le cadran 4. La glace 5 est fixée sur une boîte 6 par des moyens 36 qui seront décrits ci-après. Plus particulièrement, le mouvement 2 est muni d'aiguilles d'heures 30, de minutes 31 et de secondes 32 évoluant entre le cadran 4 et la glace 5. Le mouvement 2 comporte aussi une tige 33 de mise à l'heure sur laquelle est emmanchée une couronne 34. L'étanchéité de la tige 33 vis-à-vis de la boîte 6 est assurée par un joint torique 37. La boîte 6 est du type monocoque et comporte à sa périphérie supérieure un cran 35 dans lequel est engagée une lunette 36, cette dernière assurant la fixation de la glace 5 sur la boîte 6. La glace 5 est rendue étanche par rapport à la boîte 6 grâce à l'utilisation d'un joint 38 coincé entre glace et boîte. Selon l'acception la plus générale de l'invention, le cadran 4 et la glace 5 sont pourvus de moyens s'emboîtant mutuellement pour positionner angulairement et centrer la glace 5 par rapport au cadran 4.

On va décrire maintenant des moyens préférés pour assurer ce positionnement angulaire et ce centrage.

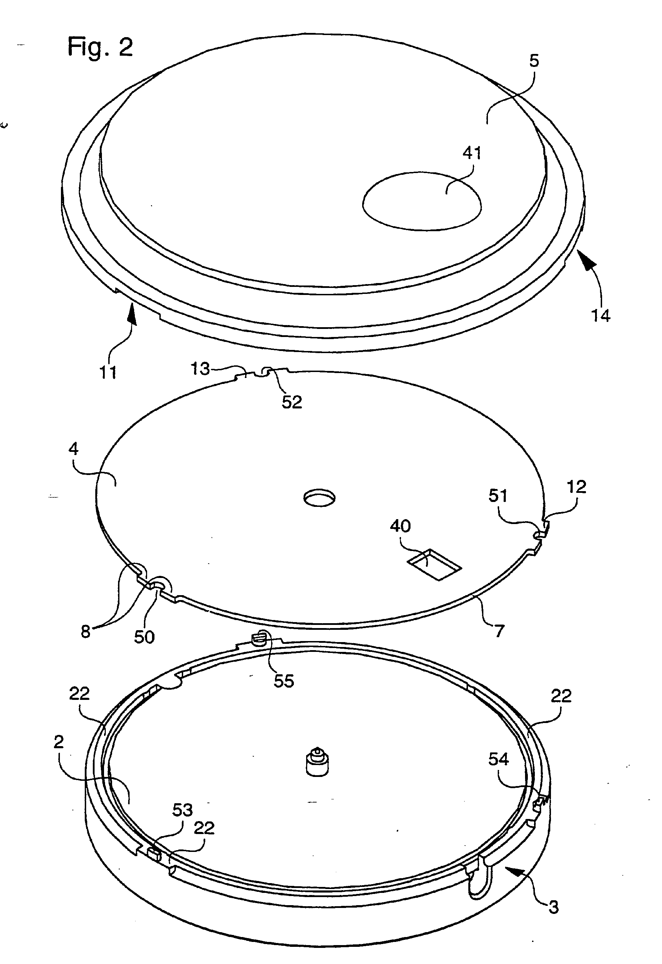

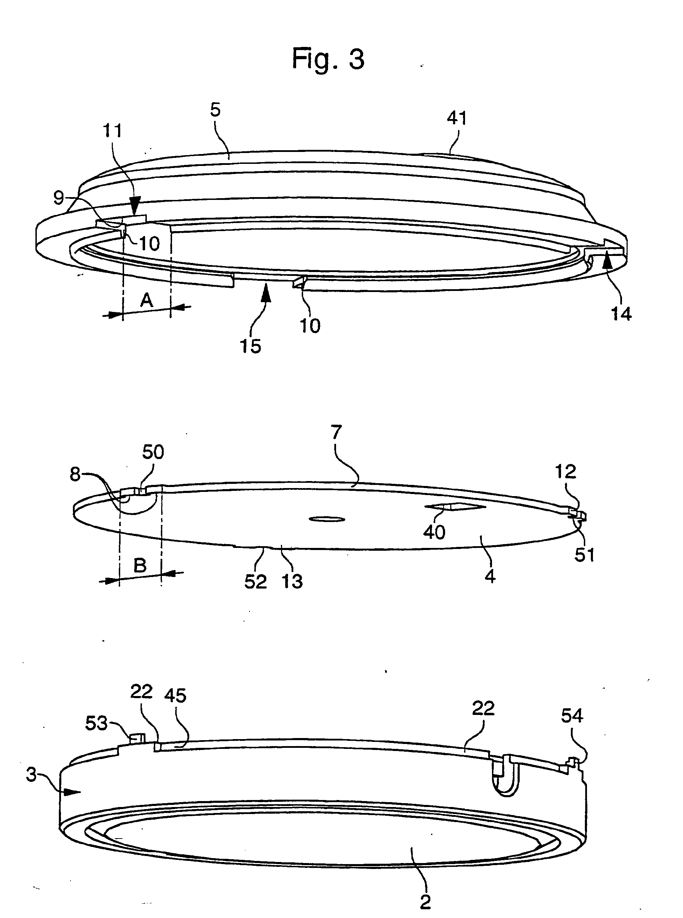

Les figures 2 et 3 sont respectivement des vues de dessus et de dessous du cercle 3, du cadran 4 et de la glace 5 montrés en perspective éclatée. Ces figures montrent le cercle d'encageage 3 dans lequel est logé le mouvement 2. Sur le cercle 3 est monté le cadran 4. A son tour la glace 5 est montée sur le cadran 4. Les figures montrent que le cadran 4 présente un flanc 7 d'où émerge au moins une oreille 8 qui dépasse le pourtour du cadran. Comme cela est apparent sur les figures 1 et 3, la glace 5 est pourvue d'un talon annulaire 9 qui repose sur le cadran 4 et d'une collerette 10 qui entoure le flanc 7 du cadran. Cette collerette 10 est pourvue d'au moins une échancrure 11 arrangée pour venir coiffer l'oreille 8. Ainsi les moyens s'emboîtant mutuellement pour positionner angulairement et centrer la glace 5 par rapport au cadran 4 consistent-ils, dans l'exécution préférée de l'invention, à imbriquer l'échancrure 11 de la glace avec l'oreille 8 du cadran 4.

Les figures 2 et 3 montrent que le cadran 4 est muni d'un guichet 40 à travers lequel apparaîtront tour à tour les chiffres d'un anneau de quantième (non représenté) dont est pourvu le mouvement 2. Les mêmes figures montrent que la glace 5 est pourvue d'une lentille 41 destinée à agrandir les chiffres apparaissant au travers du guichet 40. On comprendra que grâce à la construction décrite au paragraphe ci-dessus, la lentille 41 se trouve exactement au droit du guichet 40. Grâce à cette construction, on comprendra également que si l'intérieur de la glace 5 possède des index 42 ou des chiffres d'heure décalqués, ces décalques se trouveront en exacte correspondance avec les aiguilles 30, 31 et 32 évoluant sur le cadran 4 (voir figure 1).

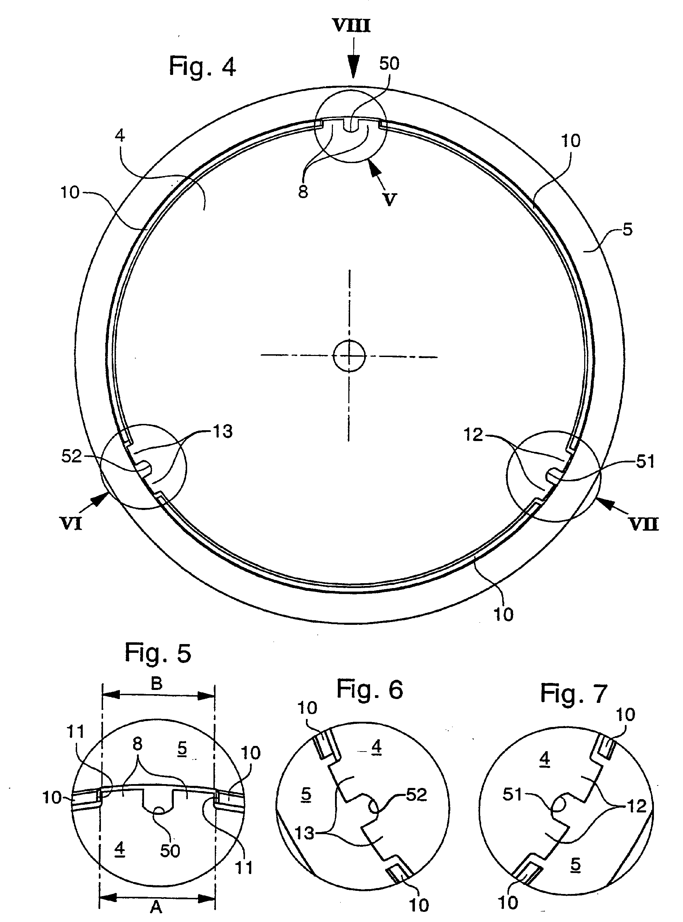

Pour des raisons pratiques de construction et de montage, on a préféré munir le cadran 4 de trois oreilles au lieu d'une seule. Ainsi en plus de la première oreille 8 dont il a été question plus haut, le cadran 4 est pourvu d'une deuxième oreille 12 et d'une troisième oreille 13, ces trois oreilles étant réparties à égales distances sur le pourtour du cadran. Aux deux oreilles supplémentaires 12 et 13 du cadran 4 vont correspondre bien naturellement deux échancrures correspondantes 14 et 15 pratiquées dans la glace 5 (voir figures 2 et 3), les nouvelles échancrures venant coiffer les nouvelles oreilles. Pour éviter tout jeu de la glace par rapport au cadran et pour faciliter la mise en place de ladite glace sur ledit cadran, la largeur d'au moins une échancrure doit correspondre sensiblement à la largeur de l'oreille qu'elle coiffe. Les figures 4 à 7 illustrent ce qui vient d'être dit. La figure 4 est une vue de dessous de la glace 5 dans laquelle est monté le cadran 4. La zone V de cette figure, agrandie en figure 5, montre qu'il n'y a pour ainsi dire aucun jeu entre la largeur B de l'oreille 8 du cadran 4 et la distance A qui sépare l'interruption de la collerette 10 qui forme l'échancrure 11 de la glace 5, la largeur de cette interruption correspondant à la largeur de l'échancrure 11 pratiquée dans la glace. Si l'on observe maintenant les figures 6 et 7 qui sont des agrandissements des zones VI et VII de la figure 4, on voit que le jeu entre la largeur des oreilles 12 et 13 et la distance qui sépare l'interruption de la collerette 10 dans laquelle prennent place respectivement les oreilles 12 et 13 est plus important. Ceci permet une mise en place plus aisée de la glace sans nuire à son centrage parfait par rapport au cadran.

On a vu plus haut que les oreilles 8, 12 et 13 ont pour but essentiel de permettre l'orientation angulaire et le centrage parfaits de la glace 5 par rapport au cadran 4. On peut cependant profiter de la présence de ces oreilles pour leur faire remplir une autre fonction qui est celle de fixer et de positionner angulairement le cadran 4 par rapport au cercle d'encageage 3.

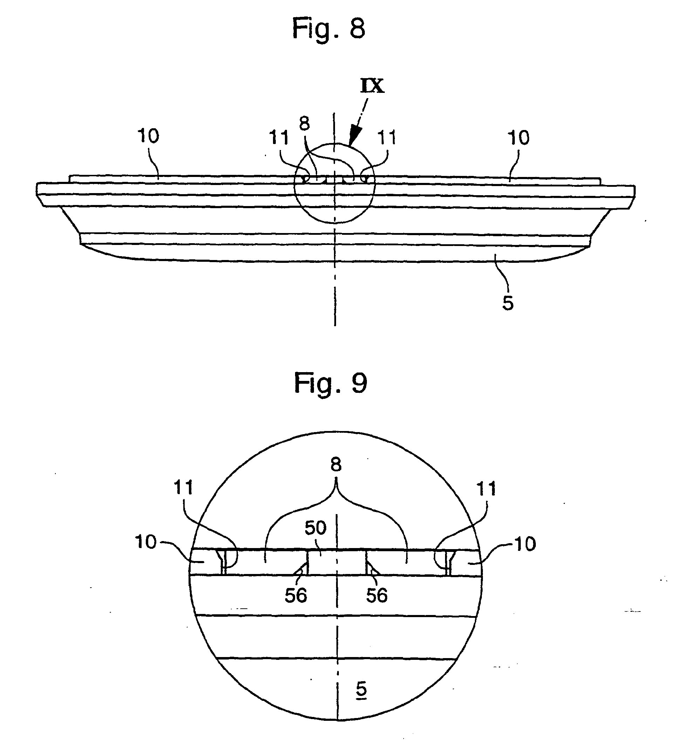

Dans ce but, les figures 2 à 8 montrent que les oreilles 8, 12 et 13 possèdent chacune une encoche référencée 50, 51 et 52 respectivement. Ces encoches sont arrangées pour recevoir chacune un tenon correspondant dressé sur la face supérieure 22 du cercle d'encageage 3. Ainsi le tenon 53 correspond à l'encoche 50, le tenon 54 à l'encoche 51 et le tenon 55 à l'encoche 52. Quand le cadran est plaqué sur le cercle, les tenons du cercle pénètrent dans les encoches respectives des oreilles du cadran. Pour fixer définitivement le cadran sur le cercle, on écrase thermiquement les tenons et les extrémités supérieures de ces dernières débordent sur des chanfreins pratiqués dans les encoches. La figure 8 montre la glace 5 vue de profil. Comme le montre bien la figure 9 qui est un agrandissement de la zone IX de la figure 8, l'encoche 50 de l'oreille 8 présente des chanfreins 56 dans lesquels viendra se loger la matière du tenon 53 pour bien ancrer le cadran sur le cercle. On a compris ici que les oreilles du cadran remplissent alors deux fonctions : celle d'orienter la glace par rapport au cadran et celle de fixer et d'orienter le cadran par rapport au cercle.

La fixation du cadran 4 en trois points équidistants se comprend par le fait que s'il n'y avait qu'un seul point de fixation, le cadran pourrait lever et ne pas appliquer parfaitement sur le cercle d'encageage 3.

## Revendications

1. Pièce d'horlogerie comportant un mouvement (2) monté dans un cercle d'encageage (3), un cadran (4) surmontant le cercle, une glace (5) surmontant le cadran et des moyens (36) pour fixer la glace sur une boîte (6), **caractérisée par le fait que** le cadran (4) comporte au moins une oreille (8) saillant de son flanc (7) et que la glace (5) est pourvue d'un talon (9) annulaire reposant sur le cadran et d'une collerette (10) entourant le flanc dudit cadran, cette collerette étant pourvue d'au moins une échancrure (11) arrangée pour coiffer ladite oreille afin de positionner angulairement et de centrer la glace par rapport au cadran.

2. Pièce d'horlogerie selon la revendication 1, **caractérisée par le fait que** le cadran (4) comporte trois oreilles (8, 12, 13) réparties à égales distances sur le pourtour du cadran et que la collerette (10) est pourvue de trois échancrures (11, 14, 15) arrangées pour coiffer les oreilles correspondantes dudit cadran, la largeur d'au moins une échancrure (11) correspondant sensiblement à la largeur d'une oreille (8) pour empêcher tout jeu angulaire de la glace par rapport au cadran.

3. Pièce d'horlogerie selon la revendication 2, **caractérisée par le fait que** chaque oreille (8, 12, 13) comporte une encoche (50, 51, 52) arrangée pour recevoir un tenon (53, 54, 55) correspondant dressé sur la face supérieure (22) du cercle d'encageage (3) pour fixer et positionner angulairement le cadran (4) par rapport audit cercle.

## Claims

1. Timepiece including a movement (2) mounted in a casing ring (3), a dial (4) mounted above the ring, a crystal (5) mounted above the dial (4) and means (36) for securing the crystal onto a case (6), **characterised in that** the dial (4) includes at least one lug (8) projecting from its flank (7) and **in that** the crystal (5) is provided with an annular shoulder (9) resting on the dial and a collar (10) surrounding the flank of said dial, said collar being provided with at least one hollow (11) arranged so as to cap said lug in order to position angularly and to centre the crystal with respect to the dial.

2. Timepiece according to claim 1, **characterised in that** the dial (4) includes three lugs (8, 12, 13) distributed at equal distances over the periphery of the dial and **in that** the collar (10) is provided with three hollows (11, 14, 15) arranged to cap the corresponding lugs of said dial, the width of at least one hollow (11) substantially corresponding to the width of a lug (8) to prevent any angular play between the crystal and the dial,

3. Timepiece according to claim 2, **characterised in that** each lug (8, 12, 13) includes a notch (50, 51, 52) arranged to accommodate a corresponding stud (53, 54, 55) raised on the top face (22) of the casing ring (3) to secure and angularly position the dial (49) with respect to said ring.

## Patentansprüche

1. Uhr mit einem in einem Gehäusering (3) gelagerten Uhrwerk (2), einem den Ring überragenden Zifferblatt (4), einem das Zifferblatt überragenden Uhrenglas (5) und mit Mitteln (36), um das Uhrenglas an einem Gehäuse (6) zu befestigen, **dadurch gekennzeichnet, dass** das Zifferblatt (4) zumindest eine Nase (8) aufweist, die von seiner Flanke (7) absteht, und dass das Uhrenglas (5) mit einem auf dem Zifferblatt aufliegenden ringförmigen Absatz (9) und mit einem die Flanke des Zifferblatts umgebenden Kragen (10) versehen ist, wobei dieser Kragen mit zumindest einer Aussparung (11) versehen ist, die dazu vorgesehen ist, die Nase zu übergreifen, um das Uhrenglas bezüglich des Zifferblatts im Winkel auszurichten und zu zentrieren.

2. Uhr nach Anspruch 1, **dadurch gekennzeichnet, dass** das Zifferblatt (4) drei Nasen (8, 12, 13) aufweist, die in gleichem Abstand über den Umfang des Zifferblatts verteilt sind, und dass der Kragen (10) mit drei Aussparungen (11, 14, 15) versehen ist, die dazu vorgesehen sind, die entsprechenden Nasen des Zifferblatts zu übergreifen, wobei die Breite zumindest einer Aussparung (11) im wesentlichen der Breite einer Nase (8) entspricht, um jegliches Winkelspiel des Uhrenglases zum Zifferblatt zu verhindern.

3. Uhr nach Anspruch 2, **dadurch gekennzeichnet, dass** jede Nase (8, 12, 13) eine Einkerbung (50, 51, 52) aufweist, die dazu vorgesehen ist, einen entsprechenden Zapfen (53, 54, 55) aufzunehmen, der an der Oberseite (22) des Gehäuserings (3) aufrecht steht, um das Zifferblatt (4) zu befestigen und bezüglich des Rings im Winkel auszurichten.
